# FASCICULE DE BREVET EUROPEEN

(11) **EP 2 111 332 B1**
(45) Date de publication et mention de la délivrance du brevet: **10.07.2013**
(21) Numéro de dépôt: 07866496.8
(22) Date de dépôt: 26.10.2007
(51) Int. Cl.: B29C 59/12, C08J 7/12, B01J 19/08

(54) **PROCÉDÉ DE TRAITEMENT DE SURFACE DE SUBSTRATS POLYMÈRES, SUBSTRATS AINSI OBTENUS ET LEUR UTILISATION POUR LA RÉALISATION DE MATÉRIAUX MULTICOUCHES**
VERFAHREN ZUR OBERFLACHENBEHANDLUNG VON POLYMERSUBSTRATEN, SO ERHALTENE SUBSTRATE UND DEREN VERWENDUNG BEI DER HERSTELLUNG VON MEHRLAGIGEN MATERIALIEN
METHOD FOR PROCESSING THE SURFACE OF POLYMER SUBSTRATES, SUBSTRATES THUS OBTAINED AND USE THEREOF IN THE PRODUCTION OF MULTILAYERED MATERIALS

(30) Priorité: 24.01.2007 FR 0752849
(43) Date de publication de la demande: 28.10.2009
(73) Titulaire: L'AIR LIQUIDE, Société Anonyme pour l'Etude et l'Exploitation des Procédés Georges Claude, 75007 Paris (FR)
(72) Inventeur: COCOLIOS, Panayotis, F-78830 Bullion (FR); NOEL, Frederic, F-92160 Antony (FR)
(74) Mandataire: Mellul-Bendelac, Sylvie Lisette
(86) Numéro de dépôt international: PCT/FR2007/052252
(87) Numéro de publication internationale: WO 2008/090292

(56) Documents cités:
- EP-A- 1 125 972
- WO-A-2005/037537
- FR-A1- 2 534 262
- US-A- 4 297 187

## Description

La présente invention concerne le domaine des traitements de surface de substrats polymères, qui sont couramment utilisés dans de très nombreuses industries, notamment celles de l'emballage alimentaire ou de l'emballage pharmaceutique, des arts graphiques, de la fabrication d'étiquettes ou de bandes adhésives, la protection de mobilier, les tapis de sol, de l'isolation thermique, ou encore pour la fabrication de composants électriques isolants.

Elle concerne plus particulièrement la fabrication de matériaux, mono ou multicouches imprimés ou non imprimés utilisés par ces industries. De tels matériaux doivent présenter une énergie de surface élevée leur assurant une excellente mouillabilité et une très bonne adhésion lors des opérations de transformation telles que l'impression ou le collage, processus dans lesquels le mouillage du substrat et son adhésion avec un enduit (encre, colle, vernis...) sont indispensables. Or, le plus souvent, ces matériaux présentent des propriétés de surface qui rendent leur utilisation difficile dans ces processus de transformation. De même, la différence de nature entre les divers matériaux mis en oeuvre, films ou feuilles plastiques du type polyoléfine hydrophobe ou autre, papier, feuille d'aluminium conduit à des difficultés de mise en contact qui ne sont résolues que par une préparation spécifique de la surface du substrat.

Parmi les opérations les plus couramment utilisées pour effectuer cette préparation spécifique permettant de rendre la surface des polymères « active », on trouve notamment des méthodes d'enduction liquide préalable des surfaces par des composés bi-fonctionnels appropriés, appelés « primaires d'adhérence », qui assurent notamment l'adhésion entre les couches de deux substrats différents ou l'adhésion d'une encre ou d'un vernis sur un substrat.

Ces techniques nécessitent la dissolution des primaires d'adhérence dans des solvants organiques polluants à une concentration voisine de 20% en matière sèche. Leur mise en oeuvre nécessite donc une consommation conséquente d'énergie pour évaporer le solvant, puis pour le recycler ou bien l'incinérer.

Aussi, d'autres traitements ont été développés, tels que les traitements de surface par plasma à basse pression, en vue d'introduire à la surface du polymère des fonctionnalités/groupements chimiques tels que des groupements amine, amide, nitrile, ou encore carbonyle, carboxyle et autre alcool ou ester, et changer ainsi les propriétés de surface du polymère, par exemple pour lui conférer une certaine hydrophilie ou encore pour améliorer l'adhésion avec des encres, vernis ou colles. Cette catégorie de traitements à basse pression est notamment décrite par N. Inagaki dans l'ouvrage Plasma surface modification and plasma polymerization, Laboratory of Polymer Chemistry at Shizuoka University, TECHNOMIC Publishing Co. Inc, paru en 1996*,* et par le document EP-679680.

Malgré leur très bon respect de l'environnement, ces méthodes de plasma à basse pression possèdent un inconvénient majeur lié au fait qu'elles sont pratiquées sous pression réduite en mode discontinu, et sont donc incompatibles avec le traitement de grandes surfaces polymères à des cadences de production élevées qui doivent être mises en oeuvre en mode continu.

Une alternative à ces traitements est aujourd'hui couramment utilisée dans l'industrie. Il s'agit d'un traitement de surface de substrat polymère par décharge électrique dans l'air à pression atmosphérique (appelé communément traitement « corona »).

Cependant, un tel traitement n'est pas satisfaisant. En effet, non seulement les valeurs d'énergie de surface obtenues par ce traitement sont trop faibles dans le cas de certains polymères tels le polypropylène, mais elles décroissent également rapidement dans le temps (vieillissement non satisfaisant).

La Demanderesse a alors proposé, dans les documents WO92/11321 et EP-622474, un procédé de traitement de surface de substrats polymères au cours duquel le substrat est soumis à une décharge électrique à barrière diélectrique, dans une atmosphère comportant un gaz porteur, un silane, et un gaz oxydant, à une pression sensiblement égale à la pression atmosphérique, en vue de déposer à la surface du substrat une couche à base de silicium. Comme le rapporte ces documents, les procédés en question donnent lieu incontestablement à d'excellentes propriétés de surface, mais l'on conçoit que l'utilisation d'un silane entraîne un surcoût qui n'est pas toujours acceptable, notamment pour des applications à faible valeur ajoutée.

Enfin, le document WO01/58992 A1 au nom de la Demanderesse, décrit un procédé de traitement de surface de films et feuilles polymères au cours duquel le substrat est soumis à une décharge électrique à barrière diélectrique, dans un mélange gazeux comportant un gaz porteur, ainsi qu'un gaz réducteur et/ou un gaz oxydant, à une pression sensiblement égale à la pression atmosphérique.

Ce traitement a pour effet de greffer sur la surface du substrat des atomes d'azote par des liaisons covalentes sous la forme de fonctions amine, amide et imide. Les variations de mélanges de gaz de traitement permettent de moduler le taux d'azote greffé sur la surface du substrat de 3 à 8%, ce qui représente une transformation d'une partie seulement de la surface exposée à la décharge électrique.

Cependant, la mise en oeuvre du procédé selon WO 01/58992 A1 pose pour certaines applications plusieurs problèmes spécifiques qui peuvent être résumés ainsi :
- Tout d'abord, elle nécessite des équipements de grandes dimensions et donc onéreux. En effet, le seuil d'ionisation des mélanges gazeux mis en oeuvre pour créer le plasma étant élevé à une pression sensiblement égale à la pression atmosphérique, il est nécessaire d'augmenter le nombre d'électrodes pour pouvoir transmettre la puissance électrique nécessaire. Pour rester compatible avec une exploitation industrielle économique on est alors contraint de limiter la vitesse du traitement.
- il faut alors également gérer les problèmes liés au refroidissement de la station échauffée par les électrodes qui fonctionnent à un potentiel électrique élevé.
- par ailleurs, les films thermosensibles (du type thermoretractable) ne peuvent être traités par un tel procédé sans être endommagés par la chaleur dégagée.
- Enfin, les hautes puissances nécessaires à la mise en oeuvre de ce procédé sont limitées par la taille des générateurs conventionnels, limitant de fait l'étendue des familles de matériaux traitables.

On pourra également se reporter au document JP2000-129015, qui décrit un procédé de traitement de surface d'objets moulés en résine, comportant la mise en contact de la surface avec une décharge électrique réalisée dans une atmosphère comportant un hydrocarbure insaturé.

On conçoit alors l'immense intérêt qu'il y aurait à disposer d'un nouveau procédé permettant de résoudre les difficultés que pose le dernier procédé évoqué quant au traitement de certains matériaux :
- il serait alors tout particulièrement intéressant de pouvoir proposer un nouveau procédé permettant le traitement d'une plus large gamme de matériaux, notamment de films thermosensibles ;
- il convient d'améliorer le procédé de façon à diminuer l'énergie spécifique nécessaire au traitement des surfaces, et ainsi diminuer les coûts d'investissement ;
- il convient également que ce nouveau procédé permette d'atteindre des vitesses de traitement élevées du même ordre que celui d'équipements modernes de transformation ou d'impression de films plastiques, par exemple allant typiquement de 300 à 600 m/min.

Comme on le verra plus en détails dans ce qui suit, les présents inventeurs ont mis en évidence qu'une solution à ces problèmes pouvait être apportée en utilisant dans un procédé à décharge électrique à barrière diélectrique de type filamentaire, à pression sensiblement égale à la pression atmosphérique, une atmosphère de traitement comportant un gaz porteur, ainsi qu'un gaz actif particulier, ceci en l'absence d'oxygène ou en tout état de cause en présence d'une teneur résiduelle en oxygène extrêmement réduite.

On entend selon la présente invention par la notion de « pression sensiblement égale à la pression atmosphérique» le fait que l'on peut, sans sortir du cadre de la présente invention, travailler à des pressions se situant à quelques dizaines de millibars, voire quelques centaines de millibars autour de la pression atmosphérique. Mais on notera que l'on préférera se situer dans une gamme de ±200 Pa autour de la pression atmosphérique, et encore plus préférentiellement dans une gamme de ±25 Pa autour de cette pression atmosphérique.

Ainsi, la présente invention est relative à un procédé de traitement de surface (on peut aussi parler de « procédé de fonctionnalisation de surfaces » sans à aucun moment sortir du cadre de la présente invention)de substrats polymères (qu'ils soient synthétiques ou naturels), au cours duquel le substrat est soumis à une décharge électrique à barrière diélectrique de type filamentaire, dans un mélange gazeux de traitement comportant au moins un gaz porteur et un gaz actif, à une pression sensiblement égale à la pression atmosphérique, caractérisé en ce que le gaz actif est choisi dans le groupe comprenant au moins un hydrocarbure mono-insaturé ou poly-insaturé, linéaire ou ramifié, ayant préférentiellement 2 à 10 atomes de carbone, plus préférentiellement 2 à 5 atomes de carbones, encore plus préférentiellement 2 ou 3 atomes de carbones, optionnellement substitué par au moins une fonction du type amine, amide, acide, alcool, imine, imide, halogénure, ou par au moins un agent couplant notamment par des groupes silanol, et leurs combinaisons, la teneur résiduelle en oxygène du mélange de traitement étant inférieure à 250 ppm, préférentiellement inférieure à 100 ppm, et encore plus préférentiellement inférieure à 50 ppm, et le mélange gazeux de traitement comprenant en outre un gaz réducteur additionnel et/ou un gaz oxydant :
- ledit gaz réducteur additionnel étant l'hydrogène ;
- ledit gaz oxydant étant choisi parmi CO₂, NO₂ et H₂O ou un mélange de ces gaz, et
- la teneur en gaz réducteur additionnel ou la teneur en gaz oxydant étant comprise dans une gamme allant de 50 à 3000 ppm vol.

A titre d'éclaircissement, de façon générale on appelle « agent couplant » une molécule bi-fonctionnelle qui permet de « coupler » ou « ponter » deux macromolécules ou deux surfaces via des réactions chimiques entre les fonctions de « l'agent couplant » et les deux surfaces considérées (sorte de « piliers en béton qui « interconnectent » deux étages d'un immeuble si l'on peut s'exprimer ainsi).

On peut alors mettre en oeuvre selon la présente invention, à titre illustratif, une molécule complexe contenant à la fois des chlorures et des groupes silanols.

De manière préférée, le gaz actif est un gaz ou un liquide en équilibre avec sa vapeur et dont la pression de vapeur à une température de 20°C est supérieure à 10 Pascal.

Préférentiellement, le gaz actif est choisi parmi les hydrocarbures insaturés ayant 1, 2 ou 3 atomes de carbones. Plus préférentiellement, le gaz actif est l'acétylène ou l'éthylène ou le propylène, ou un mélange de ces gaz.

Sans vouloir être lié par une quelconque théorie, les inventeurs pensent que le gaz actif qui est une molécule gazeuse ou liquide à l'état vapeur ayant un faible seuil d'ionisation et une très forte réactivité chimique par mécanisme radicalaire permet à la fois une forte augmentation du pourcentage d'azote greffé sur le substrat, une diminution importante de la puissance spécifique nécessaire à la mise en oeuvre du procédé, et de ce fait une augmentation de la diversité des substrats polymères compatibles avec ledit procédé selon l'invention.

Plus précisément, on peut penser que les bons résultats obtenus selon la présente invention, qui seront présentés ci-dessous, doivent être attribués à la mise en oeuvre des moyens combinés et en synergie selon la présente invention, à savoir le type de décharge choisi, le type de gaz actif présent, et l'absence d'oxygène dans l'atmosphère de traitement.

L'oxygène est un gaz particulièrement réactif lorsqu'il est soumis à une source d'énergie, il est de fait facilement excitable. En présence d'O₂, même avec des teneurs très faibles, la compétition entre O₂ et N₂ est en faveur de l'oxygène. Dans le cas de la présente invention, mettant en oeuvre un hydrocarbure, prenons l'exemple de l'acétylène, travailler en présence d'oxygène se traduirait par la réaction préférentielle entre O₂ et C₂H₂ .

Il est donc indispensable de limiter la teneur en oxygène à une valeur minimale pour ne pas qu'une grande partie de l'hydrocarbure injecté ne réagisse avec l'oxygène et ainsi ne masque les effets de cet hydrocarbure sur le traitement de surface.

On peut également avancer l'hypothèse que la molécule d'oxygène, outre le fait qu'elle possède un seuil d'excitation très faible et est très facilement excitée avec la formation d'espèces métastables, d'ions et de radicaux qui sont très réactifs et oxydent le polymère, on assiste à des recombinaisons avec l'oxygène pour former de l'ozone qui, à son tour, dégrade fortement le polymère par oxydation. On peut également penser que la molécule d'oxygène réagit très rapidement avec les radicaux formés par excitation du gaz actif en phase gazeuse et bloque ainsi l'évolution du mécanisme réactionnel qui conduit aux réactions de greffage.

Selon la présente invention, le gaz porteur est l'azote, mais l'homme de l' art est à même de choisir également un mélange de l'azote avec notamment l'argon, et/ou l'hélium. L'invention ne saurait pourtant être limitée à ces gaz, l'homme de l'art étant qualifié pour substituer ceux-ci par tout autre gaz permettant la mise en oeuvre de l' invention, étant entendu que l'azote est présent.

Selon un des aspects de l'invention, le procédé est caractérisé en ce que le mélange gazeux de traitement comprend en outre un gaz réducteur additionnel et/ou un gaz oxydant (on parle ici de gaz réducteur « additionnel » afin d'introduire la plus grande clarté possible puisque comme on le sait des hydrocarbures tels l'acétylène sont généralement considérés comme des gaz réducteurs). Préférentiellement, on choisit l'hydrogène comme gaz réducteur, et le gaz oxydant est choisi parmi CO₂, NO₂ et H₂O ou un mélange de ces gaz.

Ainsi, la présente invention a de manière particulièrement préférée pour objet un procédé de traitement de surface de substrats polymères tel que décrit plus haut, dans lequel ledit mélange gazeux de traitement est un mélange N₂/H₂, N₂/CO₂, ou N₂/N₂O en combinaison avec un gaz actif selon l'invention. De préférence le gaz actif choisi est l'acétylène et le mélange de traitement est alors préférentiellement l'une des combinaisons suivantes : N₂/C₂H₂, N₂/H₂/C₂H₂, N₂/CO₂/C₂H₂, ou N₂/N₂O/C₂H₂.

Pour la mise en oeuvre de l'invention, les teneurs en gaz actif, gaz réducteur et/ou oxydant sont de préférence ajustées de manière à obtenir une énergie de surface des substrats ainsi traités qui soit supérieure ou égale à environ 60mN/m. Une énergie de surface d'environ 60mN/m correspond à une mouillabilité communément admise comme satisfaisante par l'homme du métier.

En particulier, la teneur en gaz actif dans le mélange est comprise dans une gamme allant de 50 à 1000 ppm vol, préférentiellement de 100 à 600 ppm vol, et encore plus préférentiellement voisine de 300 ppm vol.

Dans un autre mode de réalisation de l'invention, le substrat est soumis au préalable à un prétraitement par passage dans une décharge électrique à barrière diélectrique, à une pression sensiblement égale à la pression atmosphérique, dans un mélange gazeux de prétraitement constitué d'air ou d'un gaz inerte ou d'un mélange de ces gaz. Le gaz inerte est de même nature ou de nature différente que le gaz porteur selon l'invention et est choisi notamment parmi l'azote, l'argon, l'hélium, ou un mélange de ces gaz.

De manière conforme à l'invention, le substrat polymère est de préférence plan macroscopiquement, et se présente alors sous la forme d'une feuille, d'un film ou d'une mousse. Le substrat est de plus préférentiellement constitué de fibres polymères tissées ou non tissées.

En particulier, le substrat polymère est choisi notamment parmi :
• un polymère synthétique choisi parmi un polyamide, polychlorure de vinyle, polyester, polyéthylène, polypropylène, polystyrène, polycarbonate, polyvinylalcool, poly dichlorure de vinyle ou un polyvinylacétate, ou encore un polymère fluoré tel que le polytétrafluoroéthylène ;
• un caoutchouc synthétique ou naturel,
• un polymère biodégradable choisi parmi notamment l'acide polylactique (PLA), le polycaprolactone (PCL) et les polymères à base d'amidon.

Cette liste de polymères ci-dessus n'étant donnée qu'à titre illustratif, nullement limitatif.

Des substrats polymères conformes à l'invention sont également tous les films multicouches comportant au moins un des polymères de la liste précitée.

Préférentiellement, le substrat polymère traité selon l'invention est plan macroscopiquement et a la forme d'une feuille, d'un film ou d'une mousse. Le substrat polymère peut être de plus constitué de fibres polymères tissées ou non tissées.

Encore plus préférentiellement, le polymère traité par le procédé de l'invention est choisi parmi :
• un polymère synthétique choisi parmi un polyamide, polychlorure de vinyle, polyester, polyéthylène, polypropylène, polystyrène, polycarbonate, polyvinylalcool, poly dichlorure de vinyle ou un polyvinylacétate, ou encore un polymère fluoré tel que le polytétrafluoroéthylène ;
• un caoutchouc synthétique ou naturel,
• un polymère biodégradable choisi parmi notamment l'acide polylactique (PLA), le polycaprolactone (PCL) et les polymères à base d'amidon.

Cette liste de polymères ci-dessus n'étant donnée qu'à titre illustratif, nullement limitatif.

Le procédé de traitement de surface de substrats polymères de la présente invention permet également de résoudre un problème technique supplémentaire non encore abordé jusqu'ici.

En effet, l'adhésion entre deux surfaces est généralement réalisée via l'enduction d'une colle (adhésif) sur l'une ou l'autre des surfaces, ou sur les deux. Ces colles mettent en oeuvre des produits chimiques qui, lors de l'utilisation finale du produit, sont susceptibles de migrer au contact ou à l'intérieur d'un produit alimentaire par exemple. On conçoit alors que l'élimination de telles colles serait tout particulièrement avantageuse tant pour des raisons économiques (investissement, coûts d'exploitation, récupération des solvants) que pour des raisons sanitaires.

Ainsi, un problème technique supplémentaire auquel se propose de répondre la présente invention est la réalisation d'une adhésion entre deux surfaces sans utilisation de colle, via le greffage, sur chaque surface, de molécules qui réagissent chimiquement entre elles, le produit des réactions assurant la cohésion entre les deux surfaces.

La présente invention a donc pour objet supplémentaire l'utilisation des substrats polymères traités selon le procédé de l'invention pour réaliser l'adhésion de deux surfaces sans utilisation de colle.

Dans un mode de réalisation, l'adhésion entre deux surfaces selon l'invention comprend la mise en contact de deux surfaces, la première surface étant une surface d'un substrat polymère traité selon le procédé de l'invention, c'est-à-dire greffée avec des fonctions basiques, et la deuxième surface étant une surface d'un substrat susceptible d'interagir avec ladite première surface.

Dans un mode de réalisation particulier, ladite deuxième surface est traitée par une méthode classique du type « corona » telle que décrite dans l'art antérieur, générant le greffage de molécules globalement acides sur la surface à traiter. Ainsi, lors de la mise en contact des deux surfaces greffées, les fonctionnalités greffées sont aptes à réagir entre elles et, de fait, d'engendrer l'adhésion entre les deux faces en l'absence de colle ou d'adhésif.

Ce mode de réalisation peut être étendu à d'autres méthodes connues de promotion d'adhérence entre deux surfaces. Par exemple, l'extrusion couchage, dans laquelle la surface sur laquelle sera couchée de la résine fondue est une surface d'un substrat polymère préalablement traité par le procédé selon l'invention, alors que le film de résine fondue subit une réaction d'oxydation par l'oxygène moléculaire présent dans l'air ou mieux par de l'ozone produit par un ozoneur qui génère des fonctions oxygénées à caractère acide en surface. L'extrusion laminage, correspond à un assemblage de deux substrats qui utilise comme adhésif de la résine fondue couchée simultanément sur une surface de chacun de deux substrats. Plus précisément, deux surfaces sont alors traitées selon le procédé de l'invention et mises en contact via un film de résine fondue dont les deux faces sont traitées à l'oxygène moléculaire ou encore à l'ozone.

D'autres variantes compatibles avec la présente invention sont les techniques de laminage ou couchage à chaud, de laminage adhésif ou encore la technique de laminage thermique connues par ailleurs de l'homme du métier.

Les nombreux avantages apportés par la présente invention seront mieux compris à la lumière des figures et des exemples venant illustrer la description.

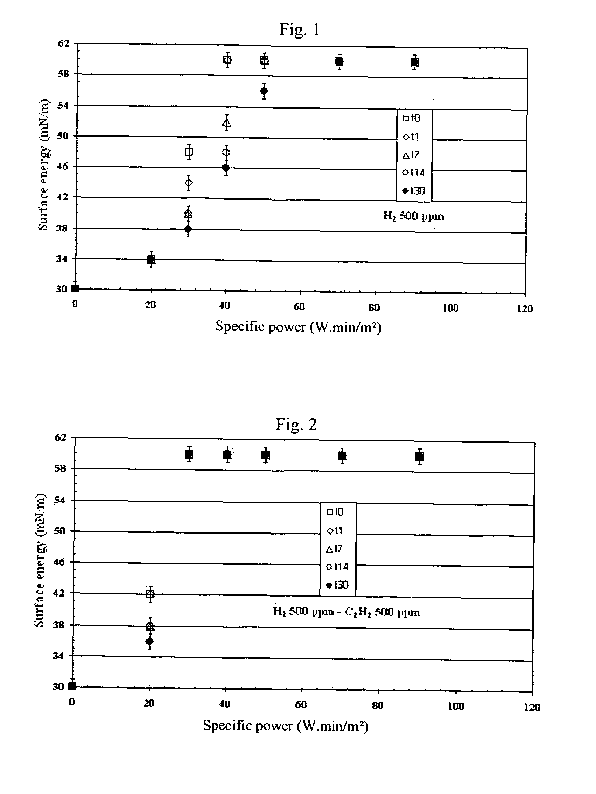

La figure 1 est un graphique représentant d'une part l'évolution de l'énergie de surface d'un film BOPP (polypropylène bi-orienté) d'épaisseur 20 µm suite à un traitement par le mélange N₂/H₂ (500 ppm de H₂) en fonction de la puissance spécifique appliquée et d'autre part la stabilité du traitement sur une période de 30 jours.

La figure 2 est un graphique représentant d'une part l'évolution de l'énergie de surface d'un film BOPP d'épaisseur 20 µm suite à un traitement conforme à l'invention par le mélange N₂/H₂/C₂H₂ (500 ppm) de H₂ - 500 ppm de C₂H₂) en fonction de la puissance spécifique appliquée et d'autre part la stabilité du traitement sur une période de 30 jours.

### EXEMPLE 1

Dans un dispositif de décharge électrique à barrière diélectrique du même type que celui décrit par la Demanderesse dans le document WO 02/40738 A2 on applique à différents films en polypropylène bi-orienté (BOPP) de 20µm et de laize variant de 200 à 2000 mm, d'épaisseur, à la vitesse de 75 m/min, des décharges électriques dans les conditions suivantes.
Essai 1 : N₂/H₂ (500 ppm de H₂)
Essai 2 : N₂/H₂ (500 ppm de H₂) + 500 ppm d'acétylène C₂H₂.
Pour chaque essai, on a appliqué différentes puissances spécifiques, allant de 20 W.min/m² à 100 W.min/m².

On a ensuite mesuré l'énergie de surface des films traités ainsi obtenus, juste après le traitement et 1, 7, 14 et 30 jours après le traitement en appliquant des encres calibrées selon les normes DIN ISO 8296, et ASTM D 2578-99a.

Les résultats sont reportés sur la figure 1.

Il ressort de ces résultats que :
- pour l'essai 1, une énergie de surface de 60mN/m stable pendant 30 jours au moins (t30) est obtenue à condition d'appliquer une puissance spécifique d'au moins 70 W.min/m².
- pour l'essai 2, une énergie de surface de 60mN/m stable pendant 30 jours au moins est obtenue cette fois dès l'application d'une puissance spécifique de seulement 30 W.min/m², soit une puissance spécifique 2,5 fois inférieure à celle de l'essai n°1.

Ainsi, pour une vitesse de traitement donnée, avec le procédé selon l'invention, un équipement de moindre taille pourra être utilisé pour obtenir une énergie de surface des substrats polymères satisfaisante.

De même, pour une taille d'équipement donnée, le traitement des substrats polymères pourra être réalisé avec une vitesse 2,5 fois plus importante.

Enfin, les effets thermiques liés à l'échauffement des électrodes suite à l'application de fortes puissances spécifiques seront diminués, et ainsi des films thermosensibles seront aptes à être traités par le procédé selon l'invention.

### EXEMPLE 2

Dans un dispositif identique à celui de l'exemple 1, on traite différents films de 20µm d'épaisseur en polypropylène bi-orienté (BOPP), avec différentes décharges dans les conditions:
Essai 3 : N₂/H₂ (500 ppm de H₂)
Essai 4 : N₂/H₂ (500 ppm de H₂) + 50 ppm de C₂H₂
Essai 5 : N₂/H₂ (500 ppm de H₂) + 100 ppm de C₂H₂
Essai 6 : N₂/H₂ (500 ppm de H₂) + 500 ppm de C₂H₂
Essai 7 : N₂/CO₂ (500 ppm)
Essai 8 : N₂/CO₂ (500 ppm) + 50 ppm de C₂H₂
Essai 9 : N₂/CO₂ (500 ppm) + 100 ppm de C₂H₂
Essai 10 : N₂/CO₂ (500 ppm) + 500 ppm de C₂H₂
Pour chaque essai, on a appliqué différentes puissances spécifiques, allant de 20 W.min/m² à 100 W.min/m².

On a ensuite mesuré l'énergie de surface des films traités ainsi obtenus, comme dans l'exemple 1 ci-dessus. Et on a relevé la puissance spécifique nécessaire à l'obtention d'une énergie de surface de 60mN/m. Les valeurs les plus significatives sont présentées dans le tableau 1 ci-après :

**Tableau 1**

| **essai** | **Puissance spécifique (W.min/m²)** |
|---|---|
| 3 | 70 |
| 4 | 50 |
| 5 | 50 |
| 6 | 30 |
| 7 | 70 |
| 8 | 70 |
| 9 | 50 |
| 10 | 40 |

Les résultats du tableau 1 montrent clairement que l'ajout, même en quantité infime (dès 50 ppm pour un mélange N₂/H₂/C₂H₂) , d'acétylène dans le mélange de gaz réactifs, permet une diminution très importante de la puissance spécifique à appliquer au système. De plus, cette diminution est observée quelque soit le mélange de gaz utilisé, un mélange ternaire N₂/H₂/C₂H₂ ou un mélange ternaire N₂/CO₂/C₂H₂.

Cette diminution de la puissance à appliquer au système pour effectuer le traitement de surface selon l'invention, autorise un traitement à moindre coût des matériaux épais, du type feuilles rigides de polypropylène ou des matériaux difficiles à traiter par plasmas atmosphériques tel le polytétrafluoro-éthylène, PTFE, nécessitant jusqu'à présent de fournir de fortes quantités d'énergie, ce qui constitue un autre avantage de la présente invention.

### EXEMPLE 3

Un substrat BOPP d'épaisseur 20µm est traité dans un dispositif identique au dispositif de l'exemple 1 avec une atmosphère d'un mélange ternaire N₂/H₂/C₂H₂ (500 ppm H₂ et 500 ppm C₂H₂) en faisant varier la puissance spécifique appliquée.

Pour chaque essai on réalise l'analyse de la composition chimique de la surface traitée par spectroscopie ESCA (Electron Spectroscopy for Chemical Analysis). Dans chaque cas l'énergie de surface, mesurée comme décrit dans l'exemple 1, était de 60mN/m stable à 30 jours.

Le tableau 2 ci-après rassemble les résultats obtenus.

**Tableau 2**

| **Puissance Spécifique (W.min/m²)** | **H₂/C₂H₂ (ppm/ppm)** | **Angle d'Analyse (°)** | **%C** | **%O** | **%N** | **N/O** |
|---|---|---|---|---|---|---|
| 70 | 500/0 | 0 | 91.77 | 3.34 | 4.89 | 1.46 |
| | | 75 | 85.84 | 5.84 | 8.32 | 1.42 |
| 30 | 500/500 | 0 | 90.48 | 3.45 | 6.07 | 1.76 |
| | | 75 | 85.60 | 5.19 | 9.21 | 1.77 |
| 50 | 500/500 | 0 | 91.39 | 3.15 | 5.46 | 1.73 |
| | | 75 | 86.52 | 4.95 | 8.53 | 1.72 |
| 70 | 500/500 | 0 | 85.29 | 4.35 | 10.36 | 2.38 |
| | | 75 | 79.87 | 6.23 | 13.90 | 2.23 |

Les résultats exposés dans le tableau 2 ci-dessus montrent en premier lieu qu'à taux d'azote fixé équivalent, il est consommé 70 W.min/m² pour un mélange N₂/H₂ et seulement 30 W.min/m² pour un mélange N₂/H₂/C₂H₂.

Deuxièmement, plus la puissance spécifique fournie au système augmente, plus le taux d'azote greffé augmente, tout comme la valeur du rapport N/O qui se rapproche de 2.5.

Troisièmement, pour une même puissance spécifique appliquée de 70 W.min/m², 70% d'azote supplémentaire est greffé avec un mélange ternaire N₂/H₂/C₂H₂, en comparaison au mélange binaire N₂/H₂.

Enfin, on atteint près de 14% de fixation d'azote à la surface du BOPP pour un traitement avec un mélange ternaire N₂/H₂/C₂H₂ et une puissance spécifique appliquée de 70 W.min/m², contre seulement 8,3% pour le traitement conventionnel, soit une augmentation d'environ 75% du nombre d'atomes d'azote greffés.

Il ressort ainsi des différents exemples de mise en oeuvre du procédé selon la présente invention que celui-ci est effectivement plus performant que les procédés de l'art antérieur. Le procédé de l'invention permet en effet à la fois d'augmenter la réactivité du mélange de gaz, d'augmenter le pourcentage d'azote greffé sur le substrat, de diminuer de manière importante la puissance spécifique nécessaire à la mise en oeuvre du procédé, et enfin d'augmenter la diversité des substrats polymères compatibles avec ledit procédé selon l'invention.

## Revendications

1. Procédé de traitement de surface de substrats polymères au cours duquel le substrat est soumis à une décharge électrique à barrière diélectrique de type filamentaire, dans un mélange gazeux de traitement comportant au moins un gaz porteur et un gaz actif, à une pression sensiblement égale à la pression atmosphérique, i.e se situant dans une gamme de quelques dizaines de millibars, ou quelques centaines de millibars autour de la pression atmosphérique, et préférentiellement dans une gamme de ±200 Pa autour de la pression atmosphérique,
**caractérisé en ce que** le mélange gazeux de traitement comporte de l'azote et un gaz actif qui est choisi dans le groupe comprenant au moins un hydrocarbure mono-insaturé ou poly-insaturé, linéaire ou ramifié, la teneur résiduelle en oxygène du mélange de traitement étant inférieure à 250 ppm, préférentiellement inférieure à 100 ppm, et encore plus préférentiellement inférieure à 50 ppm, et **en ce que** le mélange gazeux de traitement comprend en outre un gaz réducteur additionnel et/ou un gaz oxydant :
- ledit gaz réducteur additionnel étant l'hydrogène ;
- ledit gaz oxydant étant choisi parmi CO₂, NO₂ et H₂O ou un mélange de ces gaz, et
- la teneur en gaz réducteur additionnel ou la teneur en gaz oxydant étant comprise dans une gamme allant de 50 à 3000 ppm vol.

2. Procédé de traitement de surface selon la revendication 1, **caractérisé en ce que** l'hydrocarbure comporte 2 à 10 atomes de carbone, plus préférentiellement 2 à 5 atomes de carbone, encore plus préférentiellement 2 ou 3 atomes de carbone.

3. Procédé de traitement de surface selon la revendication 1 ou 2, **caractérisé en ce que** ledit hydrocarbure est substitué par au moins une fonction du type amine, amide, acide, alcool, imine, imide, halogénure, ou par au moins un agent couplant notamment par des groupes silanol, ou une de leurs combinaisons.

4. Procédé de traitement de surface selon l'une des revendications 1 à 3, **caractérisé en ce que** le gaz actif est un gaz ou un liquide à l'état vapeur dont la pression de vapeur à une température de 20°C est supérieure à 10 Pascal.

5. Procédé de traitement de surface selon l'une quelconque des revendications précédentes, **caractérisé en ce que** le gaz actif est choisi parmi les hydrocarbures insaturés ayant 2 ou 3 atomes de carbone.

6. Procédé de traitement de surface selon l'une quelconque des revendications précédentes, **caractérisé en ce que** le gaz actif est l'acétylène ou l'éthylène ou le propylène, ou un mélange de ces gaz.

7. Procédé de traitement de surface selon l'une des revendications précédentes, **caractérisé en ce que** la teneur en gaz actif dans le mélange est comprise dans une gamme allant de 50 à 1000 ppm vol., préférentiellement de 100 à 600 ppm vol., et encore plus préférentiellement voisine de 300 ppm vol.

8. Procédé de traitement de surface selon l'une quelconque des revendications précédentes, **caractérisé en ce que**, au préalable, le substrat a été soumis à un prétraitement par passage dans une décharge électrique à barrière diélectrique, à une pression sensiblement égale à la pression atmosphérique, dans un mélange gazeux de prétraitement constitué d'air ou d'un gaz inerte ou d'un mélange de ces gaz.

9. Procédé de traitement de surface selon la revendication 8, **caractérisé en ce que** ledit gaz porteur et ledit gaz inerte sont identiques ou différents et sont choisis parmi l'azote, l'argon, l'hélium ou un mélange de ces gaz.

10. Procédé de traitement de surface selon l'une quelconque des revendications précédentes, **caractérisé en ce que** ledit substrat est plan macroscopiquement et à la forme d'une feuille, d'un film ou d'une mousse.

11. Procédé de traitement de surface selon l'une quelconque des revendications précédentes, **caractérisé en ce que** ledit substrat est constitué de fibres polymères tissées ou non tissées.

12. Procédé de traitement de surface selon l'une quelconque des revendications précédentes, **caractérisé en ce que** le polymère est choisi parmi :
● un polymère synthétique choisi parmi un polyamide, polychlorure de vinyle, polyester, polyéthylène, polypropylène, polystyrène, polycarbonate, polyvinylalcool, poly dichlorure de vinyle ou un polyvinylacétate, ou encore un polymère fluoré tel que le polytétrafluoroéthylène ;
● un caoutchouc synthétique ou naturel,
● un polymère biodégradable choisi parmi notamment l'acide polylactique (PLA), le polycaprolactone (PCL) et les polymères à base d'amidon.

13. Procédé de traitement de surface selon l'une quelconque des revendications précédentes, **caractérisé en ce que** le ou les substrats ainsi traités sont utilisés pour réaliser l'adhésion de deux surfaces sans utilisation d'adhésif.

14. Procédé de traitement de surface selon la revendication 13, **caractérisé en ce que** la première surface est une surface d'un substrat polymère traité selon le procédé tel que revendiqué dans les revendications 1 à 12, et la deuxième surface est une surface d'un substrat susceptible d'interagir avec ladite première surface.

15. Procédé de traitement de surface selon la revendication 14 dans lequel ladite deuxième surface est une surface d'un substrat traité par une méthode du type air corona.

16. Procédé de traitement de surface selon la revendication 13, comprenant la mise en contact d'une surface d'un substrat polymère traité selon le procédé tel que revendiqué dans les revendications 1 à 12, avec une résine fondue ayant subi une oxydation par de l'oxygène ou de l'ozone.

17. Procédé de traitement de surface selon la revendication 13, comprenant la mise en contact de deux surfaces polymère traitées selon le procédé tel que revendiqué dans les revendications 1 à 12, par l'intermédiaire d'une couche de résine fondue traitée sur ses deux faces par oxydation par de l'oxygène ou de l'ozone.

## Patentansprüche

1. Verfahren zur Oberflächenbehandlung von Polymersubstraten, während dem das Substrat einer dielektrischen Barriereentladung des Filamenttyps unterzogen wird, in einem Behandlungsgasgemisch, das mindestens eine Trägergas und ein aktives Gas umfasst, bei einem Druck, der im Wesentlichen gleich dem atmosphärischen Druck ist, d. h. sich in einem Bereich von einigen zehn Millibar oder einigen hundert Millibar um den atmosphärischen Druck herum und vorzugsweise in einem Bereich von ± 200 Pa um den atmosphärischen Druck herum befindet,
**dadurch gekennzeichnet, dass** das Behandlungsgasgemisch Stickstoff und ein aktives Gas umfasst, das aus der Gruppe ausgewählt ist, die mindestens einen einfach ungesättigten oder mehrfach ungesättigten, linearen oder verzweigten Kohlenwasserstoff umfasst, wobei der Restsauerstoffgehalt des Behandlungsgemischs unter 250 ppm, vorzugsweise unter 100 ppm und noch mehr bevorzugt unter 50 ppm liegt, und dass das Behandlungsgasgemisch außerdem ein zusätzlicher Reduktionsgas und/oder ein oxidierendes Gas umfasst:
- wobei das zusätzliche Reduktionsgas Wasserstoff ist;
- wobei das oxidierende Gas aus CO₂, NO₂ und H₂O oder einem Gemisch dieser Gase ausgewählt ist und
- wobei der Gehalt an zusätzlichem Reduktionsgas oder der Gehalt an oxidierendem Gas in einem Bereich liegt, der von 50 bis 3000 Vol.-ppm reicht.

2. Oberflächenbehandlungsverfahren nach Anspruch 1, **dadurch gekennzeichnet, dass** der Kohlenwasserstoff 2 bis 10 Kohlenstoffatome, mehr bevorzugt 2 bis 5 Kohlenstoffatome und noch mehr bevorzugt 2 oder 3 Kohlenstoffatome umfasst.

3. Oberflächenbehandlungsverfahren nach Anspruch 1 oder 2, **dadurch gekennzeichnet, dass** der Kohlenwasserstoff durch mindestens eine Funktion des Amin-, Amid-, Säure-, Alkohol-, Imin-, I m id- oder Halogenidtyps oder durch mindestens ein Kupplungsmittel, insbesondere durch Silanolgruppen, oder eine von deren Kombinationen substituiert ist.

4. Oberflächenbehandlungsverfahren nach einem der Ansprüche 1 bis 3, **dadurch gekennzeichnet, dass** das aktive Gas ein Gas oder eine Flüssigkeit im Dampfzustand ist, deren Dampfdruck bei einer Temperatur von 20 °C über 10 Pascal liegt.

5. Oberflächenbehandlungsverfahren nach einem der vorhergehenden Ansprüche, **dadurch gekennzeichnet, dass** das aktive Gas aus ungesättigten Kohlenwasserstoffen mit 2 oder 3 Kohlenstoffatomen ausgewählt ist.

6. Oberflächenbehandlungsverfahren nach einem der vorhergehenden Ansprüche, **dadurch gekennzeichnet, dass** das aktive Gas Acetylen oder Ethylen oder Propylen oder ein Gemisch dieser Gase ist.

7. Oberflächenbehandlungsverfahren nach einem der vorhergehenden Ansprüche, **dadurch gekennzeichnet, dass** der Gehalt an aktivem Gas in dem Gemisch in einem Bereich liegt, der von 50 bis 1000 Vol.-ppm und vorzugsweise 100 bis 600 Vol.-ppm reicht und noch mehr bevorzugt nahe 300 Vol.-ppm liegt.

8. Oberflächenbehandlungsverfahren nach einem der vorhergehenden Ansprüche, **dadurch gekennzeichnet, dass** das Substrat vorher einer Vorbehandlung durch Leiten in eine dielektrische Barriereentladung bei einem Druck, der im Wesentlichen gleich dem atmosphärischen Druck ist, in einem Vorbehandlungsgasgemisch, das aus Luft oder einem inerten Gas oder einem Gemisch dieser Gase besteht, unterzogen wurde.

9. Oberflächenbehandlungsverfahren nach Anspruch 8, **dadurch gekennzeichnet, dass** das Trägergas und das inerte Gas gleich oder verschieden sind und aus Stickstoff, Argon, Helium oder einem Gemisch dieser Gase ausgewählt sind.

10. Oberflächenbehandlungsverfahren nach einem der vorhergehenden Ansprüche, **dadurch gekennzeichnet, dass** das Substrat makroskopisch eben ist und die Form eines Bogens, einer Folie oder eines Schaums aufweist.

11. Oberflächenbehandlungsverfahren nach einem der vorhergehenden Ansprüche, **dadurch gekennzeichnet, dass** das Substrat aus Polymerweb- oder -vliesstofffasern besteht.

12. Oberflächenbehandlungsverfahren nach einem der vorhergehenden Ansprüche, **dadurch gekennzeichnet, dass** das Polymer aus folgenden ausgewählt ist:
● einem synthetischen Polymer, das aus einem Polyamid, Polyvinylchlorid, Polyester, Polyethylen, Polypropylen, Polystyrol, Polycarbonat, Polyvinylalkohol, Polyvinyldichlorid oder einem Polyvinylacetat oder auch einem Fluorpolymer, wie Polytetrafluorethylen, ausgewählt ist;
● einem Kunst- oder Naturkautschuk,
● einem biologisch abbaubaren Polymer, das insbesondere aus Polymilchsäure (PLA), Polycaprolacton (PCL) und Polymeren auf Stärkebasis ausgewählt ist.

13. Oberflächenbehandlungsverfahren nach einem der vorhergehenden Ansprüche, **dadurch gekennzeichnet, dass** das oder die so behandelten Substrate zum Herstellen einer Adhäsion von zwei Oberflächen ohne Verwendung eines Klebstoffs verwendet werden.

14. Oberflächenbehandlungsverfahren nach Anspruch 13, **dadurch gekennzeichnet, dass** die erste Oberfläche eine Oberfläche eines Polymersubstrats ist, das gemäß dem in den Ansprüchen 1 bis 12 beanspruchten Verfahren behandelt wurde, und die zweite Oberfläche eine Oberfläche eines Substrats ist, das mit der ersten Oberfläche wechselwirken kann.

15. Oberflächenbehandlungsverfahren nach Anspruch 14, wobei die zweite Oberfläche eine Oberfläche eines Substrats ist, das durch ein Verfahren des Luft-Coronatyps behandelt wurde.

16. Oberflächenbehandlungsverfahren nach Anspruch 13, das das Inkontaktbringen einer Oberfläche eines Polymersubstrats, das gemäß dem in den Ansprüchen 1 bis 12 beanspruchten Verfahren behandelt wurde, mit einem geschmolzenen Harz, das einer Oxidation durch Sauerstoff oder Ozon unterzogen wurde, umfasst.

17. Oberflächenbehandlungsverfahren nach Anspruch 13, das das Inkontaktbringen von zwei Polymeroberflächen, die gemäß dem in den Ansprüchen 1 bis 12 beanspruchten Verfahren behandelt wurden, mittels einer geschmolzenen Harzschicht, die auf diesen beiden Flächen durch Oxidation durch Sauerstoff oder Ozon behandelt wurde, umfasst.

## Claims

1. Method for the surface treatment of polymer substrates, during which the substrate is subjected to a dielectric barrier electrical discharge of filamentary type, in a treatment gas mixture containing at least one carrier gas and one active gas, at a pressure substantially equal to atmospheric pressure, that is to say in a range of a few dozen millibars or a few hundred millibars around atmospheric pressure, and preferably in a range of ±200 Pa around atmospheric pressure,
**characterised in that** the treatment gas mixture comprises nitrogen and an active gas which is selected from the group comprising at least one linear or branched, monounsaturated or polyunsaturated hydrocarbon, the residual oxygen content of the treatment mixture being less than 250 ppm, preferably less than 100 ppm, and more preferably still less than 50 ppm, and **in that** the treatment gas mixture further comprises an additional reducing gas and/or an oxidising gas:
- said additional reducing gas being hydrogen;
- said oxidising gas being selected from CO₂, NO₂ and H₂O or a mixture of these gases, and
- the content of additional reducing gas or the content of oxidising gas being in a range of from 50 to 3000 ppm vol.

2. Surface treatment method according to claim 1, **characterised in that** the hydrocarbon comprises 2 to 10 carbon atoms, more preferably 2 to 5 carbon atoms, more preferably still 2 or 3 carbon atoms.

3. Surface treatment method according to either claim 1 or claim 2, **characterised in that** said hydrocarbon is substituted by at least one functional group of the amine, amide, acid, alcohol, imine, imide or halide type, or by at least one coupling agent, in particular by silanol groups, or a combination thereof.

4. Surface treatment method according to any of claims 1 to 3, **characterised in that** the active gas is a gas or a liquid in vapour state of which the vapour pressure at a temperature of 20 °C is greater than 10 Pascal.

5. Surface treatment method according to any of the preceding claims, **characterised in that** the active gas is selected from unsaturated hydrocarbons having 2 or 3 carbon atoms.

6. Surface treatment method according to any of the preceding claims, **characterised in that** the active gas is acetylene or ethylene or propylene, or a mixture of these gases.

7. Surface treatment method according to any of the preceding claims, **characterised in that** the content of active gas in the mixture is in a range of from 50 to 1000 ppm vol., preferably of from 100 to 600 ppm vol., and more preferably still close to 300 ppm vol.

8. Surface treatment method according to any of the preceding claims, **characterised in that**, in advance, the substrate was subjected to a pretreatment by passing into a dielectric barrier electrical discharge at a pressure substantially equal to atmospheric pressure in a pretreatment gas mixture consisting of air or of an inert gas or of a mixture of these gases.

9. Surface treatment method according to claim 8, **characterised in that** said carrier gas and said inert gas are identical or different and are selected from nitrogen, argon, helium or a mixture of these gases.

10. Surface treatment method according to any of the preceding claims, **characterised in that** said substrate is macroscopically flat and has the shape of a sheet, a film or a foam.

11. Surface treatment method according to any of the preceding claims, **characterised in that** said substrate consists of woven or non-woven polymer fibres.

12. Surface treatment method according to any of the preceding claims, **characterised in that** the polymer is selected from:
● a synthetic polymer selected from a polyamide, polyvinyl chloride, polyester, polyethylene, polypropylene, polystyrene, polycarbonate, polyvinyl alcohol, polyvinyl dichloride or a polyvinyl acetate, or else a fluoropolymer such as polytetrafluoroethylene;
● a synthetic or natural rubber;
● a biodegradable polymer selected in particular from polylactic acid (PLA), polycaprolactone (PCL) and starch-based polymers.

13. Surface treatment method according to any of the preceding claims, **characterised in that** the substrate(s) treated in this manner are used for achieving adhesion of two surfaces without the use of adhesive.

14. Surface treatment method according to claim 13, **characterised in that** the first surface is a surface of a polymer substrate treated according to the method as claimed in claims 1 to 12, and the second surface is a surface of a substrate that is capable of interacting with said first surface.

15. Surface treatment method according to claim 14, wherein said second surface is a surface of a substrate treated by an air-corona-type method.

16. Surface treatment method according to claim 13, comprising contacting a surface of a polymer substrate treated according to the method as claimed in claims 1 to 12 with a molten resin that has been subjected to oxidation by oxygen or ozone.

17. Surface treatment method according to claim 13, comprising contacting two polymer surfaces treated according to the method as claimed in claims 1 to 12 via a layer of molten resin treated on each of the two faces thereof by oxidation by oxygen or ozone.
